# EUROPEAN PATENT APPLICATION

(11) **EP 2 319 781 A1**
(43) Date of publication of application: **11.05.2011**
(21) Application number: 10189710.6
(22) Date of filing: 02.11.2010
(51) Int. Cl.: B65G 17/08, B65G 17/38

(54) **Multi-Link Conveyor Chain**

(30) Priority: 04.11.2009 GB 0919303
(71) Applicant: Pennine Industrial Equipment Limited, Skelmanthorpe, Huddersfield HD8 9DT (GB)
(72) Inventor: Marshall, Christopher, Holmfirth, Yorkshire HD9 1LT (GB)
(74) Representative: Stuttard, Garry Philip

(57) **Abstract**

The present invention relates to a multi-link conveyor chain which may be used (for example) in the glass industry and to an enclosure member (1) for protecting the integrity of the multi-link conveyor chain during use.

## Description

The present invention relates to a multi-link conveyor chain which may be used (for example) in the glass industry and to an enclosure member for protecting the integrity of the multi-link conveyor chain during use.

Multi-link conveyor chains are in widespread use in the glass industry for transporting glass products between processing stations. For example, a multi-link conveyor chain which is typically 100 feet long may be used to transport blown glass from a blowing station to an annealing station. In the conventional multi-link conveyor chain, there is a plurality of parallel spaced apart elongate pins having an oval-shaped cross-section. Mounted on adjacent elongate pins are a series of link plates spaced apart along the pin by a plurality of washers, each link plate comprising a first and a second link. Each of the first and second link is capable of engaging a drive sprocket and has an oval-shaped aperture for receiving the elongate pin. The washer is typically a circular plate with a central circular aperture for receiving the pin. A conventional multi-link conveyor chain is described in EP-A-1241117.

The conventional multi-link conveyor chain is driven by the engagement of the links of the link plate with the multiple teeth of a drive sprocket during a cycle of engagement. Chordal action causes most chains to rise and fall during sprocket rotation. This creates vibrations which limit the load and speed capabilities of the chain.

The present invention seeks to improve multi-link conveyor chains by deploying elongate dual pins with opposed convex faces.

Thus viewed from one aspect the present invention provides a multi-link conveyor chain adapted to provide a substantially flat horizontal surface driveable between a first processing station and a second processing station by engagement with a drive sprocket during a cycle of engagement, said multi-link conveyor chain comprising:
a plurality of elongate dual pins spaced apart in substantially parallel relationship, each of the elongate dual pins having a non-circular section and including a first elongate dual pin adjacent to a second elongate dual pin,
   wherein the first elongate dual pin has a first elongate pin and a second elongate pin each with a substantially C-shaped section, wherein the first elongate dual pin has a first end extending beyond a first edge of the substantially flat horizontal surface and a second end extending beyond a second edge of the substantially flat horizontal surface, wherein opposed faces of the first elongate pin and second elongate pin are convex and
   wherein the second elongate dual pin has a first elongate pin and a second elongate pin each with a substantially C-shaped section, wherein the second elongate dual pin has a first end extending beyond a first edge of the substantially flat horizontal surface and a second end extending beyond a second edge of the substantially flat horizontal surface, wherein opposed faces of the first elongate pin and second elongate pin are convex; and
a plurality of inner link plates mounted on adjacent elongate dual pins having a first link connected to a second link by a connecting portion, each of the first and the second link having a main body and a circumferentially dependent sprocket engaging member, said main body defining an aperture shaped to accommodate the non-circular section of an elongate dual pin.

When the multi-link conveyor chain of the present invention engages a drive sprocket, the opposed (*eg* back-to-back) convex faces of the elongate dual pin may roll against each other to lessen the sliding friction otherwise prevalent in a multi-link conveyor chain.

In a preferred embodiment, the opposed faces are in rolling contact during at least a part of (preferably the whole of) the cycle of engagement with the drive sprocket.

The inner link plate may be an inner plain link plate. The aperture defined by the main body of the first link and second link of the inner link plate may be irregularly-shaped to accommodate the non-circular section of an elongate dual pin. For example, the aperture may be substantially circular or elliptical (*eg* oval) with a part circumferential protuberance. The part circumferential protuberance may extend inwardly towards the connecting portion. The part circumferential protuberance may be substantially on or near to the anteroposterior axis of the inner link plate. The part circumferential protuberance may be substantially C-shaped.

The multi-link conveyor chain may further comprise one or more outer link plates. The outer link plate may have a first link connected to a second link by a connecting portion, each of the first and the second link having a main body. The main body of the first link and the second link of an outer link plate may define a substantially C-shaped aperture whose shape essentially matches the substantially C-shaped section of the elongate pin. For example, the outer link plate may be an outer guide link plate or an outer plain link plate.

The multi-link conveyor chain may further comprise one or more inner guide link plates. The inner guide link plate may have a first link connected to a second link by a connecting portion, each of the first and the second link having a main body. The aperture defined by the main body of the first link and second link of the inner guide link plate may be irregularly-shaped to accommodate the non-circular section of an elongate dual pin. For example, the aperture may be substantially circular or elliptical (*eg* oval) with a part circumferential protuberance. The part circumferential protuberance may extend inwardly towards the connecting portion. The part circumferential protuberance may be substantially on or near to the anteroposterior axis of the inner guide link plate. The part circumferential protuberance may be substantially C-shaped.

Preferably in the first elongate dual pin, the first elongate pin has a first end extending beyond a first edge of the substantially flat horizontal surface and a second end extending beyond a second edge of the substantially flat horizontal surface and the second elongate pin has a first end which does not extend beyond a first edge of the substantially flat horizontal surface and a second end which does not extend beyond a second edge of the substantially flat horizontal surface.

Preferably in the second elongate dual pin, the second elongate pin has a first end extending beyond a first edge of the substantially flat horizontal surface and a second end extending beyond a second edge of the substantially flat horizontal surface and the first elongate pin has a first end which does not extend beyond a first edge of the substantially flat horizontal surface and a second end which does not extend beyond a second edge of the substantially flat horizontal surface.

Particularly preferably the first elongate pin of the first elongate dual pin and the second elongate pin of the second elongate dual pin are the outermost elongate pins of the adjacent first elongate dual pin and second elongate dual pin.

Preferably the multi-link conveyor chain comprises: a plurality of elongate dual pins spaced apart in substantially parallel relationship including a first elongate dual pin adjacent to a second elongate dual pin which is adjacent to a third elongate dual pin, each of said elongate dual pins having a first end, a second end and a non-circular section, wherein a plurality of inner link plates are consecutively mounted in a staggered fashion along the first, second and third elongate dual pins.

The circumferentially dependent sprocket engaging member of each of the first and second link of the inner link plate may be rounded or substantially flat edged. Each of the first link and second link of the inner link plate may have a substantially teardrop profile.

Inner link plates may be mounted consecutively along an elongate dual pin. Some or all of the inner link plates may be spaced apart by one or more spacers. The main body of the (or each) spacer may define a circular or non-circular aperture. Each spacer may comprise a main body defining a non-circular aperture for receiving the elongate dual pin shaped to accommodate the non-circular section of the elongate dual pin.

Preferably the substantially C-shaped section of the first elongate pin and second elongate pin is substantially crescent.

Preferably the profile of the opposed faces of each of the first elongate pin and second elongate pin is a substantially radiussed profile. Particularly preferably the profile of the opposed faces of each of the first elongate pin and second elongate pin at least approximates to Rcos(θ) (where θ is half the maximum articulation angle during the cycle of engagement (preferably half the articulation angle between adjacent link plates when the profile extends to a maximum value sufficient for the multi-link conveyor chain to wrap around the sprocket)).

In a preferred embodiment, the multi-link conveyor chain further comprises:
a first enclosure member positioned at the first edge of the substantially flat horizontal surface comprising:
   a main body defining a first substantially C-shaped aperture and a second substantially C-shaped aperture, wherein the shape of the first substantially C-shaped aperture and second substantially C-shaped aperture essentially matches the substantially C-shaped section of the first elongate pin of the first elongate dual pin and second elongate pin of the second elongate dual pin respectively and the depth of the first substantially C-shaped aperture and second substantially C-shaped aperture is sufficient to enclose the first end of the first elongate pin of the first elongate dual pin and the first end of the second elongate pin of the second elongate dual pin respectively;
a second enclosure member positioned at the second edge of the substantially flat horizontal surface comprising:
   a main body defining a third substantially C-shaped aperture and a fourth substantially C-shaped aperture, wherein the shape of the third substantially C-shaped aperture and fourth substantially C-shaped aperture essentially matches the substantially C-shaped section of the first elongate pin of the first elongate dual pin and second elongate pin of the second elongate dual pin respectively and the depth of the third substantially C-shaped aperture and fourth substantially C-shaped aperture is sufficient to enclose the second end of the first elongate pin of the first elongate dual pin and the second end of the second elongate pin of the second elongate dual pin respectively; and
a first flat pin head secured to and retaining the first end of the first elongate pin of the first elongate dual pin and seated in a counterbore of the first substantially C-shaped aperture,
a second flat pin head secured to and retaining the first end of the second elongate pin of the second elongate dual pin and seated in a counterbore of the second substantially C-shaped aperture,
a third flat pin head secured to and retaining the second end of the first elongate pin of the first elongate dual pin and seated in a counterbore of the third substantially C-shaped aperture and
a fourth flat pin head secured to and retaining the second end of the second elongate pin of the second elongate dual pin and seated in a counterbore of the fourth substantially C-shaped aperture.

Generally speaking, the first and second enclosure members will be identical. Each flat pin head is typically non-protruding. The flat pin heads may be fully encapsulated within the counterbore. The counterbore may be singly tapered, multiply (*eg* doubly) tapered or non-tapered. The counterbore may have a primary and secondary taper. The depth of the counterbore is typically 2mm.

The counterbore may be cylindrical. The counterbore may be a flat recess.

The first, second, third and fourth flat pin heads are typically spin rivetted (*eg* eccentrically spin rivetted) flat pin heads.

In a preferred embodiment, the multi-link conveyor chain comprises: a plurality of first and second enclosure members as hereinbefore defined positioned respectively at the first and second edges of the substantially flat horizontal surface so as to enclose the first and second end of each of the plurality of elongate dual pins.

The main body of each enclosure member may have a substantially trapezoidal section. For example, the main body may have a first side substantially parallel to a second side, wherein the second side is longer than the first side and has rounded corners. Preferably the first side has rounded corners (typically to a lesser extent than the second side). In use, the first enclosure member is positioned at the first edge with the second side uppermost. In use, the second enclosure member is positioned at the second edge with the second side uppermost. The rear face of the main body may be recessed (*eg* with a substantially U-shaped recess). The first (shorter) side may be closed or open. Where the first side is open, the main body may adopt a twin flat-edged, substantially teardrop profile.

Where the shorter side is open and the rear face is non-recessed, the enclosure member is particularly useful in centre guide conveyor chains. Where the shorter side is closed and the rear face is recessed, the enclosure member is particularly useful in side guide conveyor chains. Where the shorter side is closed and the rear face is non-recessed, the enclosure member is particularly useful in multi-guide conveyor chains.

The enclosure member may be sized and configured so as to have a maximum radial extent which is equal to or less than adjacent inner link plates. This ensures that the enclosure member does not interfere with the substantially flat horizontal surface.

It is not intended that the present invention be limited to use in the glass industry. It is expected that the multi-link conveyor chain of the invention will be suitable in any industry which desires transportation between a first station and a second station. For example, the multi-link conveyor chain of the invention could be used to transport automotive parts in the automotive industry.

Viewed from a further aspect the present invention provides an enclosure member as hereinbefore defined.

The present invention will now be described in a non-limitative sense with reference to the accompanying Figures in which:
Figure 1 illustrates a first embodiment of the enclosure member of the invention;
Figure 2a illustrates a partial embodiment of the multi-link conveyor chain of the invention in schematic form;
Figure 2b illustrates in isolation an inner link plate of the multi-link conveyor chain of Figure 2a;
Figure 3 illustrates a second embodiment of the enclosure member of the invention;
Figure 4 illustrates a third embodiment of the enclosure member of the invention; and
Figures 5 and 6 illustrate the technical effect behind the advantages of the invention.

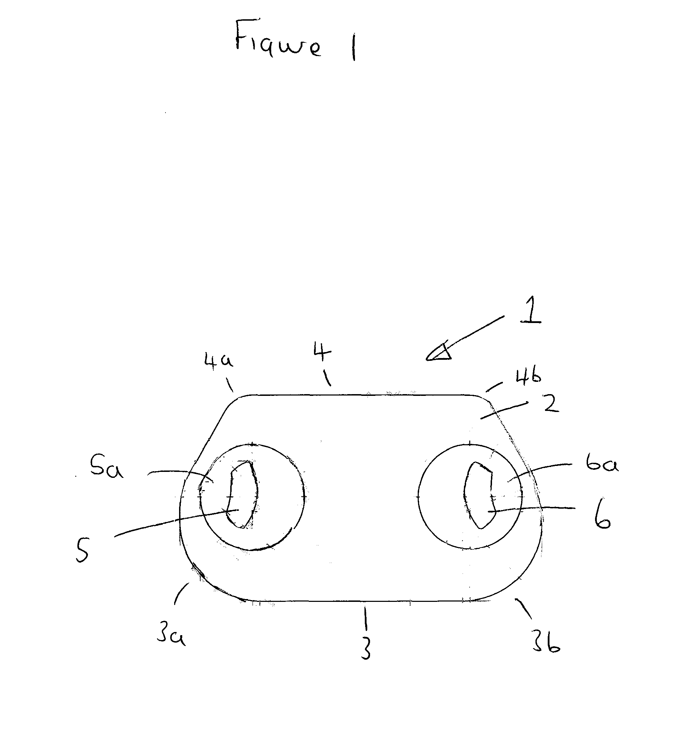

Figure 1 illustrates a first embodiment of the enclosure member of the invention designated generally by reference numeral 1. The enclosure member 1 comprises a trapezoidal main body 2 having a long side 3 parallel to a closed short side 4. The corners 3a and 3b of the long side 3 are rounded off (and to a lesser extent so are the corners 4a and 4b of the short side 4). The main body 2 defines a first substantially C-shaped aperture 5 and a second substantially C-shaped aperture 6, each of which is provided with a cylindrical counterbore 5a and 6a respectively. The counterbores 5a and 6a are non-tapered.

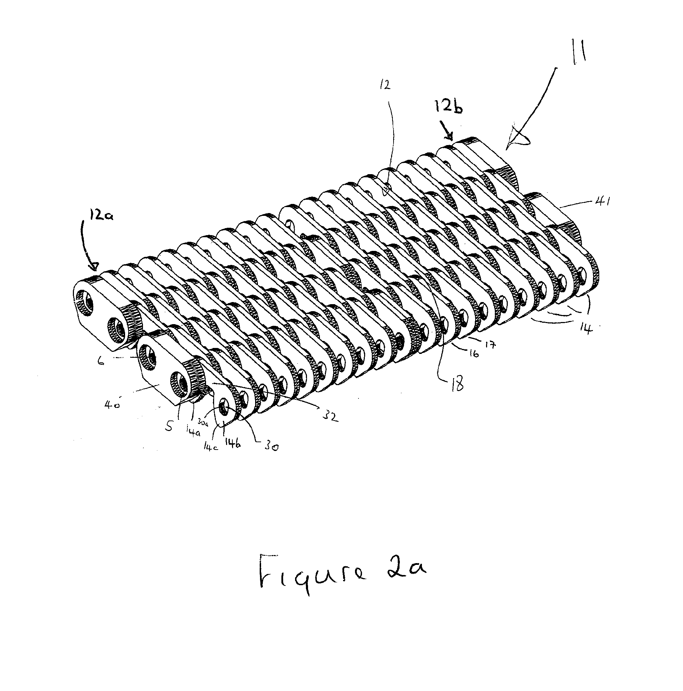

Figure 2a illustrates a partial schematic view of an embodiment of the multi-link conveyor chain of the invention designated generally by reference numeral 11. For the sake of clarity, the elongate dual pins are omitted from Figure 2a.

The multi-link conveyor chain 11 provides a flat surface 12 upon which may be carried articles such as glass bottles to a processing station. The multi-link conveyor chain 11 comprises a series of elongate dual pins upon which are mounted a number of inner link plates 14. Each pair of consecutive inner link plates (16 and 17 for example) is spaced apart along adjacent first and second elongate dual pins. Inner link plates (16, 17 and 18 for example) are mounted consecutively in a staggered fashion along consecutive first, second and third elongate dual pins.

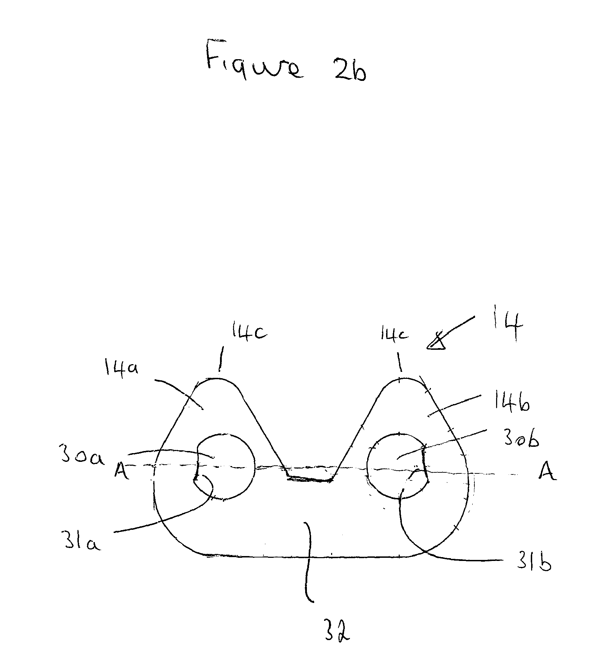

With respect to Figure 2b, each of the plurality of inner link plates 14 has twin links 14a, 14b having a substantially teardrop profile which extends into a sprocket engaging tooth 14c. The links 14a, 14b are connected by a connecting portion 32. An aperture 30a and 30b in each of links 14a and 14b accommodates the non-circular section of an elongate dual pin. Each aperture 30a and 30b has a part circumferential protuberance 31a, 31b extending inwardly towards the connecting portion 32 on or near to the anteroposterior axis A of the inner link plate 14.

In the first elongate dual pin, a first elongate pin has a first end extending beyond a first edge 12a of the flat surface 12 and a second end extending beyond a second edge 12b of the flat surface 12 and a second elongate pin has a first end which does not extend beyond the first edge 12a of the flat surface 12 and a second end which does not extend beyond the second edge 12b of the flat surface 12. In the second elongate dual pin (which is adjacent to the first elongate dual pin), a second elongate pin has a first end extending beyond the first edge 12a of the flat surface 12 and a second end extending beyond the second edge 12b of the flat surface 12 and a first elongate pin has a first end which does not extend beyond the first edge 12a of the flat surface 12 and a second end which does not extend beyond the second edge 12b of the flat surface 12.

Each enclosure member 40 and 41 is as hereinbefore described with reference to Figure 1 (and the numbering where appropriate is retained). Each enclosure member 40 and 41 is positioned at the first edge 12a and second edge 12b of the flat surface 12 respectively. The ends of each of the elongate pins of the first and second elongate dual pins which extend beyond the edges 12a and 12b of the flat surface 12 are secured with a flat pin head seated in the counterbore 5a and 6a. This may be achieved by eccentric spin rivetting a piece of carbide to the end of the elongate pin. In this manner, the ends of each of the elongate pins of the first and second elongate dual pins are protected using the first and second enclosure members 40, 41.

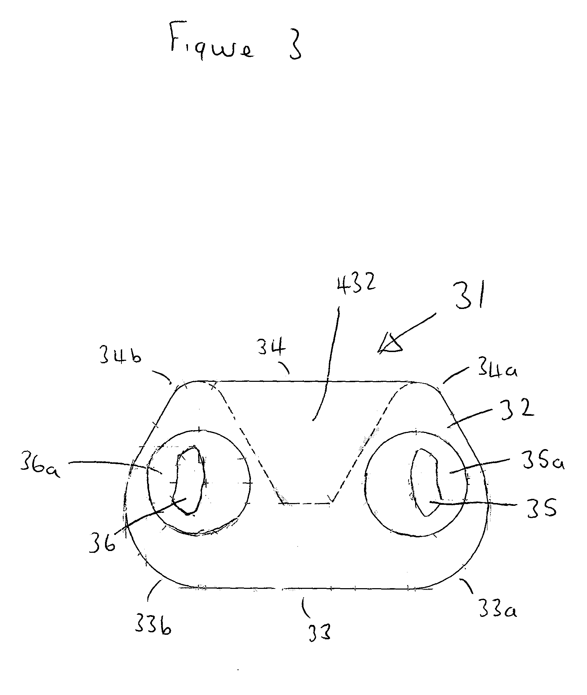

Figure 3 illustrates a second embodiment of the enclosure member of the invention designated generally by reference numeral 31. The enclosure member 31 is used in side guide chains. The enclosure member 31 comprises a trapezoidal main body 32 having a long side 33 parallel to a closed short side 34. The corners 33a and 33b of the long side 33 are rounded off (and to a lesser extent so are the corners 34a and 34b of the short side 34). The front face of the main body 32 is partially recessed with a substantially U-shaped recess 432. The main body 32 defines a first substantially C-shaped aperture 35 and a second substantially C-shaped aperture 36, each of which are provided with a cylindrical counterbore 35a and 36a respectively. The counterbores 35a and 36a are non-tapered.

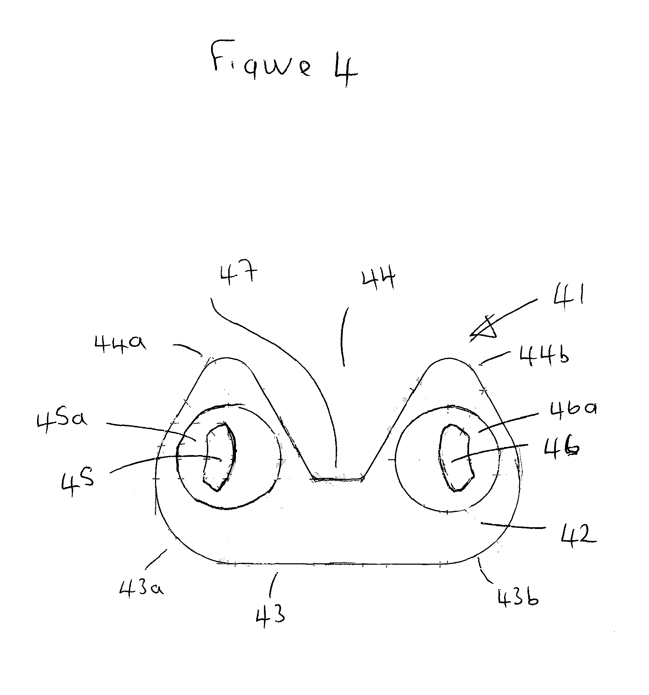

Figure 4 illustrates a third embodiment of the enclosure member of the invention designated generally by reference numeral 41. The enclosure member 41 is used in centre guide chains. The enclosure member 41 comprises a trapezoidal main body 42 having a long side 43 parallel to an open short side 44. The open short side is defined by a deep U-shaped cutaway portion 47. The corners 43a and 43b of the long side 43 are rounded off (and to a lesser extent so are the corners 44a and 44b of the short side 44). The main body 42 defines a first substantially C-shaped aperture 45 and a second substantially C-shaped aperture 46, each of which are provided with a cylindrical non-tapered counterbore 45a and 46a respectively.

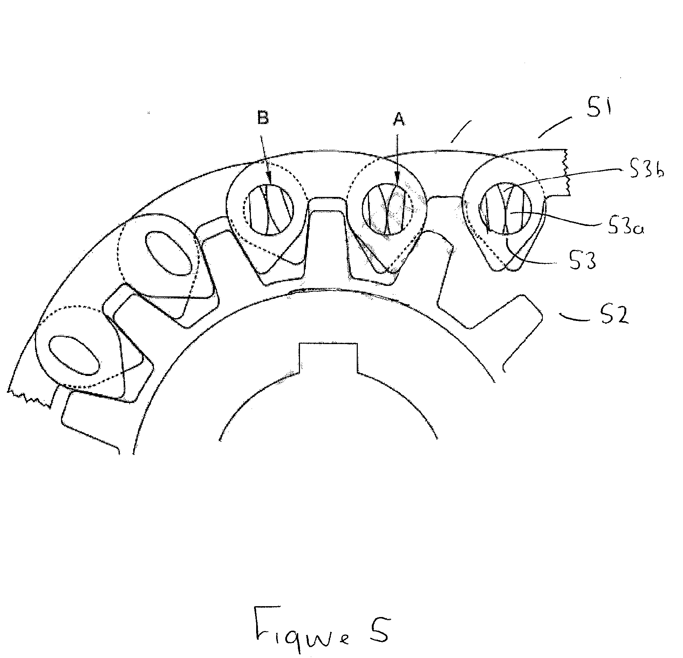

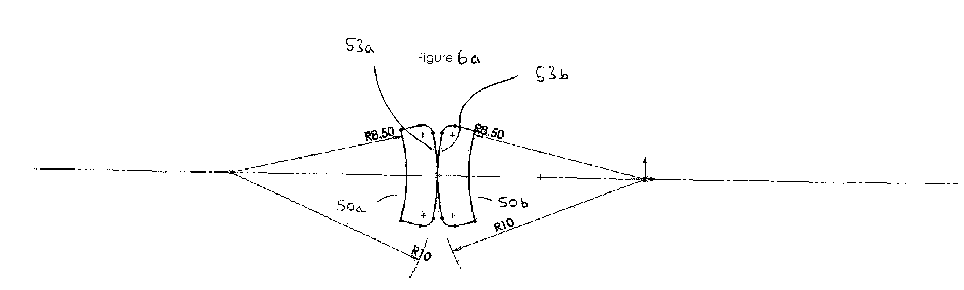

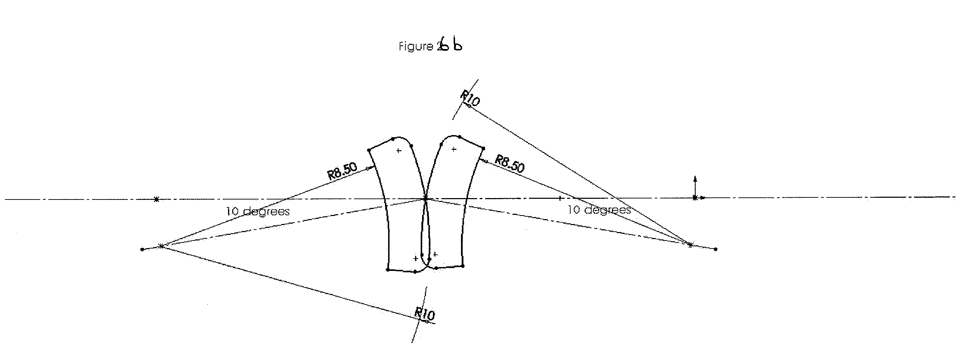

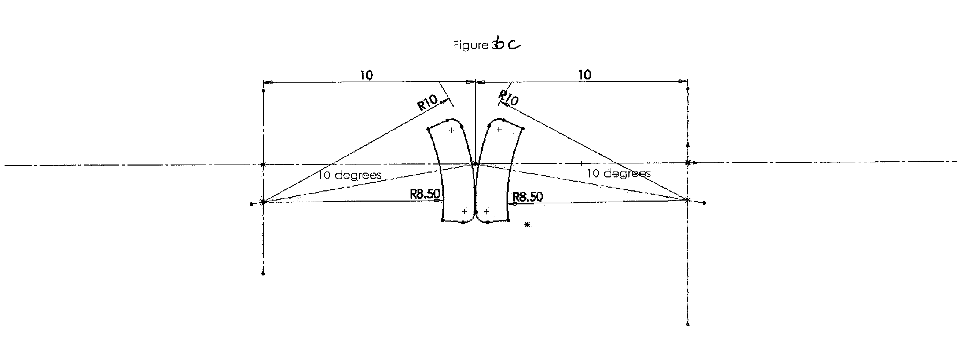

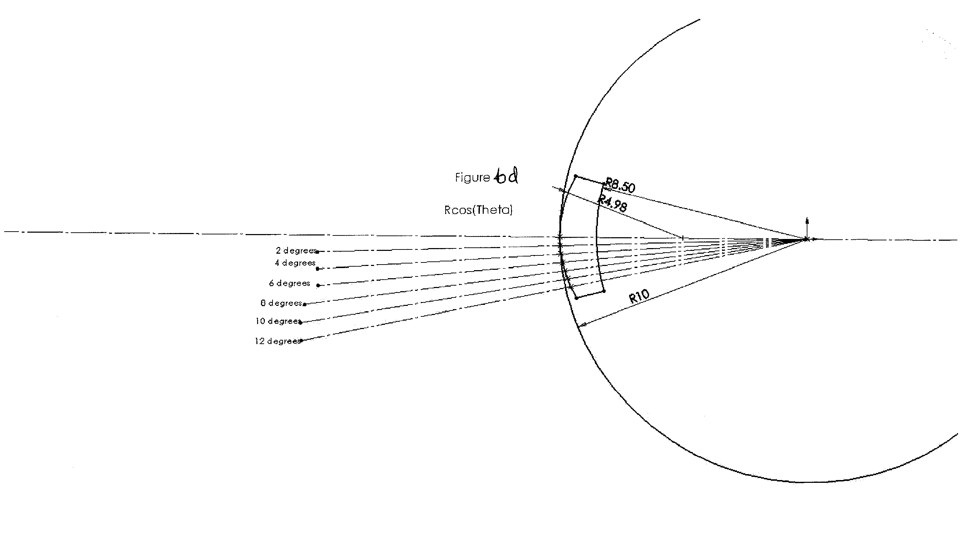

Figures 5 and 6 illustrate the technical effect behind the advantages of the invention. The multi-link conveyor chain 51 engages a drive sprocket 52 and moves from position A to position B. Mounted on a first elongate pin 50a and a second elongate pin 50b of elongate dual pins 53 are inner link plates 14 which rotate causing the first elongate pin 50a and second elongate pin 50b to rotate relatively and opposed convex surfaces 53a and 53b of the elongate dual pin 53 to roll against each other.

When the inner link plates 14 are in line, the point of contact between the first elongate pin 50a and second elongate pin 50b is on the centre line connecting the centres of the convex surfaces 53a and 53b (see Figure 6a). As the inner link plate 14 is driven around the drive sprocket 52, they will overlap if the centres remain fixed (see Figure 6b). For the first elongate pin 50a and second elongate pin 50b to maintain contact in the articulated position, they must move out to give clearance at the top (see Figure 6c). The radial distance to this point of contact reduces from R to Rcos(θ) (where θ is half the articulation angle). Where the radius of the opposed convex faces 53a, 53b is constant, the clearance between the first elongate pin 50a and second elongate pin 50b when the inner link plates 14 are in line must be sufficient to ensure contact at maximum articulation. For example at 20° articulation, the radius at point of contact is Rcos(10) = 0.985R which for a pin radius of 10mm gives a required clearance of 2x0.015x10=0.3mm (see Figure 6b). Further clearance may be required to ensure that the multi-link conveyor chain sits on the teeth of the drive sprocket 52. By making the profile of the opposed convex faces 53a, 53b follow the cosine rule, it is possible to achieve constant clearance between the first elongate pin 50a and second elongate pin 50b as they articulate (see Figure 6d).

## Claims

1. A multi-link conveyor chain adapted to provide a substantially flat horizontal surface driveable between a first processing station and a second processing station by engagement with a drive sprocket during a cycle of engagement, said multi-link conveyor chain comprising:
a plurality of elongate dual pins spaced apart in substantially parallel relationship, each of the elongate dual pins having a non-circular section and including a first elongate dual pin adjacent to a second elongate dual pin,
wherein the first elongate dual pin has a first elongate pin and a second elongate pin each with a substantially C-shaped section, wherein the first elongate dual pin has a first end extending beyond a first edge of the substantially flat horizontal surface and a second end extending beyond a second edge of the substantially flat horizontal surface, wherein opposed faces of the first elongate pin and second elongate pin are convex and
wherein the second elongate dual pin has a first elongate pin and a second elongate pin each with a substantially C-shaped section, wherein the second elongate dual pin has a first end extending beyond a first edge of the substantially flat horizontal surface and a second end extending beyond a second edge of the substantially flat horizontal surface, wherein opposed faces of the first elongate pin and second elongate pin are convex; and
a plurality of inner link plates mounted on adjacent elongate dual pins having a first link connected to a second link by a connecting portion, each of the first and the second link having a main body and a circumferentially dependent sprocket engaging member, said main body defining an aperture shaped to accommodate the non-circular section of an elongate dual pin.

2. A multi-link conveyor chain as claimed in claim 1 wherein the opposed faces are in rolling contact during at least a part of the cycle of engagement with the drive sprocket.

3. A multi-link conveyor chain as claimed in claim 1 or 2 wherein the aperture defined by the main body of the first link and second link of the inner link plate is irregularly-shaped to accommodate the non-circular section of an elongate dual pin.

4. A multi-link conveyor chain as claimed in any preceding claim wherein the aperture is substantially circular or elliptical with a part circumferential protuberance.

5. A multi-link conveyor chain as claimed in claim 4 wherein the part circumferential protuberance extends inwardly towards the connecting portion and is substantially on or near to the anteroposterior axis of the inner link plate.

6. A multi-link conveyor chain as claimed in any preceding claim wherein in the first elongate dual pin, the first elongate pin has a first end extending beyond a first edge of the substantially flat horizontal surface and a second end extending beyond a second edge of the substantially flat horizontal surface and the second elongate pin has a first end which does not extend beyond a first edge of the substantially flat horizontal surface and a second end which does not extend beyond a second edge of the substantially flat horizontal surface.

7. A multi-link conveyor chain as claimed in any preceding claim wherein in the second elongate dual pin, the second elongate pin has a first end extending beyond a first edge of the substantially flat horizontal surface and a second end extending beyond a second edge of the substantially flat horizontal surface and the first elongate pin has a first end which does not extend beyond a first edge of the substantially flat horizontal surface and a second end which does not extend beyond a second edge of the substantially flat horizontal surface.

8. A multi-link conveyor chain as claimed in claim 6 or 7 wherein the first elongate pin of the first elongate dual pin and the second elongate pin of the second elongate dual pin are the outermost elongate pins of the adjacent first elongate dual pin and second elongate dual pin.

9. A multi-link conveyor chain as claimed in any preceding claim comprising: a plurality of elongate dual pins spaced apart in substantially parallel relationship including a first elongate dual pin adjacent to a second elongate dual pin which is adjacent to a third elongate dual pin, each of said elongate dual pins having a first end, a second end and a non-circular section, wherein a plurality of inner link plates are consecutively mounted in a staggered fashion along the first, second and third elongate dual pins.

10. A multi-link conveyor chain as claimed in any preceding claim wherein the substantially C-shaped section of the first elongate pin and second elongate pin is substantially crescent.

11. A multi-link conveyor chain as claimed in any preceding claim wherein the profile of the opposed faces of each of the first elongate pin and second elongate pin is a substantially radiussed profile.

12. A multi-link conveyor chain as claimed in claim 11 wherein the profile of the opposed faces of each of the first elongate pin and second elongate pin at least approximates to Rcos(θ), where θ is half the articulation angle between adjacent link plates when the profile extends to a maximum value sufficient for the multi-link conveyor chain to wrap around the sprocket.

13. A multi-link conveyor chain as claimed in any preceding claim further comprising:
a first enclosure member positioned at the first edge of the substantially flat horizontal surface comprising:
a main body defining a first substantially C-shaped aperture and a second substantially C-shaped aperture, wherein the shape of the first substantially C-shaped aperture and second substantially C-shaped aperture essentially matches the substantially C-shaped section of the first elongate pin of the first elongate dual pin and second elongate pin of the second elongate dual pin respectively and the depth of the first substantially C-shaped aperture and second substantially C-shaped aperture is sufficient to enclose the first end of the first elongate pin of the first elongate dual pin and the first end of the second elongate pin of the second elongate dual pin respectively;
a second enclosure member positioned at the second edge of the substantially flat horizontal surface comprising:
a main body defining a third substantially C-shaped aperture and a fourth substantially C-shaped aperture, wherein the shape of the third substantially C-shaped aperture and fourth substantially C-shaped aperture essentially matches the substantially C-shaped section of the first elongate pin of the first elongate dual pin and second elongate pin of the second elongate dual pin respectively and the depth of the third substantially C-shaped aperture and fourth substantially C-shaped aperture is sufficient to enclose the second end of the first elongate pin of the first elongate dual pin and the second end of the second elongate pin of the second elongate dual pin respectively; and
a first flat pin head secured to and retaining the first end of the first elongate pin of the first elongate dual pin and seated in a counterbore of the first substantially C-shaped aperture,
a second flat pin head secured to and retaining the first end of the second elongate pin of the second elongate dual pin and seated in a counterbore of the second substantially C-shaped aperture,
a third flat pin head secured to and retaining the second end of the first elongate pin of the first elongate dual pin and seated in a counterbore of the third substantially C-shaped aperture and
a fourth flat pin head secured to and retaining the second end of the second elongate pin of the second elongate dual pin and seated in a counterbore of the fourth substantially C-shaped aperture.

14. A multi-link conveyor chain as claimed in claim 13 wherein the main body of each enclosure member has a substantially trapezoidal section with a first closed side substantially parallel to a second side, wherein the second side is longer than the first side and has rounded corners.

15. An enclosure member as defined in any preceding claim.
